# EUROPEAN PATENT SPECIFICATION

(11) **EP 3 455 306 B1**
(45) Date of publication and mention of the grant of the patent: **21.07.2021**
(21) Application number: 16918437.1
(22) Date of filing: 06.10.2016
(51) Int. Cl.: C09D 11/023, C09D 11/03, C09D 11/322, C09D 11/38, G01N 29/028

(54) **INK COMPOSITIONS**
TINTENZUSAMMENSETZUNGEN
COMPOSITIONS D'ENCRE

(43) Date of publication of application: 20.03.2019
(73) Proprietor: Hewlett-Packard Development Company, L.P., Spring TX 77389 (US)
(72) Inventor: DEARDURFF, Larrie, Corvallis, Oregon 97330-4239 (US); BHATT, Jayprakash C., Corvallis, Oregon 97330-4239 (US); JACKSON, Milton Neill, Corvallis, Oregon 97330-4239 (US)
(74) Representative: ZBM Patents - Zea, Barlocci & Markvardsen
(86) International application number: PCT/US2016/055725
(87) International publication number: WO 2018/067157

(56) References cited:
- EP-A1- 2 390 287
- EP-A2- 1 086 997
- WO-A1-2011/115614
- WO-A1-2015/134026
- JP-A- 2013 124 270
- US-A1- 2001 020 431
- US-A1- 2003 043 245
- US-A1- 2005 027 035
- US-A1- 2014 028 766

## Description

### BACKGROUND

Color pigments are typically dispersed or suspended in a liquid vehicle to be utilized in inks. A variety of colored pigments are difficult to disperse and stabilize in water-based vehicles due to the nature of the surface of pigments and the self-assembling behavior of pigments. One way to facilitate color pigment dispersion and sustained suspension in a liquid vehicle is to adding a dispersant, such as a polymer, to the liquid vehicle. Another way to stabilize pigment is to covalently attach a small molecule, oligomer, or polymer to a surface of the pigment to form a self-dispersed pigment. Regardless of the technique of dispersion, the attached or unattached dispersant stabilizes the pigment in the fluid. Pigments that are made to be very stable can often penetrate print media resulting in low color saturation. Thus, enhancing color saturation of ink compositions containing pigments would be a desirable property to achieve generally.

### BRIEF DESCRIPTION OF THE DRAWINGS

Additional features and advantages of the disclosure will be apparent from the detailed description which follows, taken in conjunction with the accompanying drawings, which together illustrate, by way of example, features of the present technology.
FIG. 1 depicts a graph of colloidal vibrational current compared to ionic strength provided by a monovalent salt in cyan, magenta, and yellow ink in accordance with examples of the present disclosure;
FIG. 2 depicts a graph of primary color saturation compared to increasing monovalent salt concentration in accordance with examples of the present disclosure; and
FIG. 3 depicts a graph of secondary color saturation compared to increasing monovalent salt concentration in accordance with examples of the present disclosure.

### DETAILED DESCRIPTION

The invention is defined by the claims 1-9 on file. The present disclosure is drawn to ink compositions, methods of making ink compositions, and methods of determining a crash point of self-dispersed pigment. In accordance with the present disclosure, a color pigment that would otherwise clump together and settle out of the liquid vehicle can be suspended if the pigment is modified with a covalently attached small molecule, oligomer, or polymer. Two principal mechanisms of stabilization for self-dispersed pigments include steric stabilization and electrostatic stabilization. In the present disclosure in particular, electrostatic stabilization can be relevant to tuning the saturation, or more particularly, increase the color saturation of the pigment when printed on plain paper or other non-ColorLok® media. If the pigment is black, optical density (OD) can likewise be enhanced. Electrostatic stabilization occurs when the outer surface of the pigments becomes essentially equally charged (or charged at least enough to remain suspended) in the suspension fluid. The equal charge on the outer surface of individual colored pigments results in a Coulomb-repulsion that prevents individual self-dispersed colored pigments from clumping together. The ink compositions and methods described herein provide for control of electrostatic stabilization of ink compositions by manipulating a concentration of an added monovalent salt, thereby allowing for the enhancement or increase of color saturation of the ink compositions when printed on plain, non-ColorLok®, print media. In accordance with this, the addition of a monovalent salt to a self-dispersed pigmented ink can attenuate electrostatic stabilization. Thus, by controlling the concentration of monovalent salt, e.g., adding just enough to keep the dispersed pigment electrostatically stable without adding too much causing the pigment to crash, high color saturation, even on non-ColorLok® office media or plain paper, can be achieved.

Pigment crashing can occur when the stabilization forces, e.g., particularly electrostatic stabilization, provided by the attached small molecule, oligomer or polymer do not provide enough stabilization to keep the pigments separated in space enough to prevent adjacent pigments from crashing in on themselves. Thus, in the context of the present disclosure, "crash point" can be defined where a molar concentration (ionic strength) of a monovalent salt is just high enough that electrostatic stabilization provided by the attached dispersant is unable to prevent the pigment from crashing. In other words, the crash point represents the molar concentration of the monovalent salt demarking the line between self-dispersed pigment stability and the self-dispersed pigment beginning to crash. In one example, the crash point of a pigment in an ink can be determined experimentally as described herein, e.g., trial and error or pigment colloidal vibrational current (CVI) techniques.

In accordance with this, by adding a monovalent salt at a concentration in an ink that brings the ionic strength (measured as the molar concentration of the added salt) just below the crash point, when the ink is printed on plain paper or non-ColorLok® paper, liquid vehicle absorbs into the fibrous paper substrate, thus increasing the molar concentration or ionic strength of the monovalent salt at the surface of the media. Because the ionic strength of the monovalent salt was very close to the crash point for the pigment in the ink reservoir (prior to printing), once just a small portion of the liquid vehicle rapidly absorbs into the plain paper media, the pigment crashes at the surface of the paper. Thus, much of the self-dispersed pigment remains at the surface when it crashes, and the color saturation can be increased compared to inks that are otherwise identical, but which have less (or no) monovalent salt therein.

In one example, the present disclosure is drawn to an ink composition which can include an aqueous liquid vehicle and from 2 wt% to 7 wt% self-dispersed pigment dispersed in the aqueous liquid vehicle. The ink composition can also include from 0.1 wt% to 1 wt% monovalent salt. The self-dispersed pigment to monovalent salt weight ratio in the ink composition can be from 3:1 to 35:1, from 4:1 to 20:1, or from 6:1 to 10:1, in one specific example, the weight ratio for cyan ink can be from 8:1 to 10:1, for example.

To illustrate one advantage of one example, formulations can be prepared where the pigment remains stable while in an inkjet fluid container. However, when the ink composition is printed on non-ColorLok® paper such as plain paper, after just a small portion of the aqueous liquid vehicle is absorbed into the paper, the increased ionic strength of the monovalent salt in the ink at a surface of the paper causes the self-dispersed pigment to crash at the surface of the paper. This can be accomplished using the weight percentages and ratios described herein; however, in further detail, in some examples, a pigment crash point can be determined and the monovalent salt can be present at a molar concentration from 30% to 95% of the crash point, or from 50% to 90% of the crash point, or from 60% to 85% of the crash point.

In another example, a method of formulating an ink composition can include dispersing a self-dispersed pigment in an aqueous liquid vehicle, and adding a monovalent salt to the aqueous liquid vehicle. The monovalent salt can bring the ink to from 30% to 95% of a molar concentration of a crash point of the self-dispersed pigment. In one example, the crash point of the self-dispersed pigment is from 0.01 M to 0.15 M. In another example, the monovalent salt can be the ink to from 50% to 90%, or from 60% to 85%, of the molar concentration of the crash point of the self-dispersed pigment. To illustrate by way of example, if the crash point is at about 0.05 M, then the molar concentration of the monovalent salt can added to bring the concentration to from 30% to 95% of 0.05 M (or 50% to 90% 0.05 M; or 60% to 85% 0.05 M). In this example, the steps of dispersing the self-dispersed pigment in the aqueous liquid vehicle and adding the monovalent salt can be carried out in any order or simultaneously.

In another example, a method of determining a crash point of a self-dispersed pigment can include formulating an ink composition which includes a self-dispersed pigment, and adding known concentrations of a monovalent salt to the ink composition to formulate multiple test samples, the multiple test samples provided by i) incrementally adding known concentrations to the ink composition or ii) adding different known concentrations to multiple portions of the ink composition. Note that the multiple portions can be formulated separately, or can be formulated once and split into smaller aliquots. An additional step includes measuring colloidal vibrational current for the multiple test samples at the various known concentrations. By this approach, an additional step of determining a peak or near peak colloidal vibrational current can be carried out. The peak or near peak vibrational current can be just prior to a drop in the colloidal vibrational current. Thus, the crash point may be found between the peak or near peak colloidal vibrational current and a drop in colloidal vibrational current. In certain examples, the crash point may be determined to be at an ionic strength from 0.01 M to 0.15 M, from 0.01 M to 0.5 M, or from 0.02 M to 0.1 M.

In each of these examples, there are three components that can be used in the present methodology, or which can be formulated together to generate inks with improved saturation or optical density, namely the pigment, the dispersant attached to the pigment, and the monovalent salt. The ionic strength (measured as molar concentration) of the monovalent salt that provides improved saturation can depend on the pigment and attached dispersant selected for use. The crash point can be determined experimentally by trial and error, or can be determined using colloidal vibrational current techniques described herein. In any event, the crash point for these three components is not universal, but crash points can be readily determined as described herein, followed by formulating ink compositions, in one example, that include an ionic strength of monovalent salt that approaches the crash point, but does not exceed the crash point, e.g., wherein the concentration is also from 30% to 95% of the crash point.

**With** specific reference to the pigment, the pigment is not particularly limited. The particular pigment used will depend on the colorists desires in creating the composition. Pigment colorants can include cyan, magenta, yellow, black, red, blue, orange, green, pink, etc. Suitable organic pigments include, for example, azo pigments including diazo pigments and monoazo pigments, polycyclic pigments (e.g., phthalocyanine pigments such as phthalocyanine blues and phthalocyanine greens, perylene pigments, perynone pigments, anthraquinone pigments, quinacridone pigments, dioxazine pigments, thioindigo pigments, isoindolinone pigments, pyranthrone pigments, and quinophthalone pigments), nitropigments, nitroso pigments, anthanthrone pigments such as PR168, and the like. Representative examples of phthalocyanine blues and greens include copper phthalocyanine blue, copper phthalocyanine green and derivatives thereof. These pigments can be modified to include a small molecule, oligomer, or polymer to form the self-dispersed pigments described herein. Examples of self-dispersed pigments can include: Cab-O-jet® 300K, Cab-O-jet® 400K, Cab-O-jet® 250C, Cab-O-jet® 2603C, Cab-O-jet® 450C, Cab-O-jet® 2604M, Cab-O-jet® 260M, Cab-O-jet® 4565M, Cab-O-jet® 460M, Cab-O-jet® 465M, Cab-O-jet® 470M, Cab-O-jet® 2605Y, Cab-O-jet® 470Y, Cab-O-jet® 270Y, or mixtures thereof. Cab-O-jet pigments are available from Cabot Corporation.

If desired, two or more self-dispersed pigments can be combined to create novel color compositions. In one example, a self-dispersed pigment combination can form a red ink by combining a magenta pigment and a yellow self-dispersed pigment, e.g. 50-60 wt% magenta self-dispersed pigment and 40-50 wt% yellow pigment. In another example, the self-dispersed pigment combination can form a green ink by combining a yellow self-dispersed pigment and a cyan self-dispersed pigment, e.g., 65-75 wt% yellow self-dispersed pigment and 25-35 wt% cyan self-dispersed pigment. In yet another example, the self-dispersed pigment combination can form a blue ink by combining cyan self-dispersed pigment and magenta self-dispersed pigment, e.g., 85-95 wt% cyan self-dispersed pigment and 5-15 wt% magenta self-dispersed pigment.

**The** self-dispersed pigments of the present disclosure can be from nanometers to a micron in size, e.g., 20 nm to 1 µm. In one example the pigment can be from about 50 nm to about 500 nm in size. Pigment sizes outside this range can be used if the pigment can remain dispersed and provide adequate printing properties.

The self-dispersed pigment load in the ink compositions can range from 2 wt% to 7 wt%. In one example, the pigment load can be from 2 wt% to 6 wt%. In a further example, the pigment load can be from 3 wt% to 5 wt%.

With specific reference to the small molecule, oligomer, or polymer that can be used to self-disperse pigments, examples may include benzene, sulfonic acids, carboxylic acids, and/or phosphonic acids. More generally, the dispersant used to attach to the pigment can vary based on the pigment; however, the attached dispersant typically include acid groups. Some suitable acid monomers for the dispersant can include acrylic acid, methacrylic acid, carboxylic acid, sulfonic acid, phosphonic acid, the like, or combinations thereof.

In order to formulate the self-dispersed pigment into an ink composition, the self-dispersed pigment may be combined with an aqueous liquid vehicle. The liquid vehicle is not particularly limited. The liquid vehicle can include polymers, solvents, surfactants, antibacterial agents, UV filters, other colorant, monovalent salts (as described in greater detail hereinafter) and/or other additives. However, as part of the ink composition, the self-dispersed pigment is included. In one example, along with other parameters used to determine the crash point and charge stabilization, a lower self-dispersed pigment load may provide for the ability to be more flexible with other parameters, e.g., concentration of monovalent salt may be lowered with acceptable results.

Turning now to the monovalent salt, any of a number of salts (including monovalent alkali metal salts, monovalent non-metallic salts, or combinations thereof. Examples of monovalent non-metallic salts can include monovalent quaternary ammonium salts [NR⁺⁴], where R is an alkyl group or an aryl group organic salts), e.g., NH₄F, NH₄Cl, NH₄NO₃, (NH₄)₂SO₄, and/or (NH₄)₃PO₄. Examples of monovalent alkali metal salts that can be used include LiF, NaF, KF, RbF, CsF, LiCl, KCI, NaCl, CsCI, RbCI, LiBr, CsBr, RbBr, KBr, NaBr, NH₄Br, Lil, Nal, KI, Rbl, Csl, NaNO₃, KNO₃, LiNO₃, RbNO₃, CsNO₃, KNO₃, Li₂SO₄, Na₂SO₄, K₂SO₄, Cs₂SO₄, Rb₂SO₄, Li₃PO₄, Na₃PO₄, K₃PO₄, Rb₃PO₄, Cs₃PO₄, Li₃PO₄, monosodium citrate, disodium citrate, trisodium citrate, potassium citrate, rubidium citrate, cesium citrate, lithium citrate, sodium ascorbate, potassium ascorbate, lithium ascorbate, lithium acetate, sodium acetate, potassium acetate, cesium acetate, rubidium acetate, monosodium glutamate, and/or potassium glutamate. Essentially, any salt that includes a monovalent alkali metal cation or a monovalent non-metallic cation (ionically associated at one or more location to an anion) can be used.

Using only weight percentages to establish the monovalent salt concentration, in some cases, may not provide a detailed or specific enough range or concentration for each and every one of these monovalent salts that may be used. However, to establish generalized ranges, the salt can typically be present in the ink at from 0.1 wt% to 1 wt%, or from 0.1 wt% to 0.8 wt%, from 0.2 wt% to 1 wt%, or from 0.3 wt% to 0.8 wt%. These weight ranges are provided primarily for guidance and to emphasize that the range of salt used is typically low, but above at least a minimum threshold of 0.1 wt% to generate improved saturation. When combining specific self-dispersed pigments and specific monovalent salts, ionic strength based on molar concentration can be further used to provide more specific range information where color saturation may be improved further. For example, the molar concentration of the monovalent salt can be from 30% to 95% of the crash point, or from 50% to 90% of the crash point, or from 60% to 85% of the crash point. As mentioned above, the "crash point" can be defined by a molar concentration of the monovalent salt where its ionic strength in the ink is just high enough that electrostatic stabilization provided by the attached dispersant is not strong enough to prevent the pigment from crashing. In accordance with this, depending on the self-dispersed pigment and monovalent salt selected, the crash point of the pigment may be at a molar concentration of monovalent salt from 0.01 M to 0.15 M. In other more specific examples, for yellow pigment, the crash point may be at a molar concentration of monovalent salt of 0.01 M to 0.05 M or from 0.02 M to 0.04 M; for magenta ink, the crash point may be at a molar concentration of monovalent salt of 0.01 to 0.05 M or from 0.02 M to 0.04 M; and/or for cyan ink, the crash point may be at a molar concentration of monovalent salt of 0.03 M to 0.1 M, or from 0.05 M to 0.08 M. Ink compositions with mixtures of pigments used for other colors, e.g., Red, Blue, Green, Purple, Pink, Orange, etc., can be adjusted so that neither pigment reaches its crash point in one example.

One reason crash point is defined based on ionic strength rather than by weight percentage has to do, in part, with the varying molecular weights of the monovalent salts that can be used. That being stated, a weight range from about 0.1 wt% to about 1 wt% for the monovalent salt concentration in the ink may be suitably broad enough to cover various pigment and monovalent salt concentrations that are possible. In further detail, some pigments and monovalent salt concentrations may provide crash points that are close to either range end of the 0.1 wt% or 1 wt% monovalent salt concentration. To illustrate, monovalent salt concentrations typically below about 0.1 wt% may only provide minimal saturation improvement, even with monovalent salts that are relatively molecularly light, e.g., NaCl, KCI, NaF, KF, etc. Thus, concentrations of 0.1 wt% or more tend to provide more noticeable saturation improvement (but may cause crashing at lower weight percentages). On the other hand, though monovalent salt concentrations above about 1 wt% are typically more than enough to crash most pigments (which is undesirable while in the ink reservoir), for salts having a heavier molecular weight, e.g., CsBr, Rbl, Cs₂SO₄, Rb₂SO₄, etc., but which may provide a similar ionic strength as lighter monovalent salts that may alternatively be included at lower weight percentages, monovalent salt concentrations approaching the 1 wt% upper limit may be suitable for use. For example, a heavy monovalent salt may not provide as much ionic strength per weight percent as a light monovalent salt, so a higher weight percentage of the heavier monovalent could be used to formulate an ink having an ionic strength close to the crash point. Likewise, if a heavier monovalent salt is used, 0.1 wt% of the monovalent salt may not provide enough ionic strength to achieve improved color saturation or black optical density, depending in part on the ink formulation density.

In accordance with this, with respect to the monovalent salt, it is noted that weight percentage ranges, e.g., 0.1 wt% to 1 wt%, 0.1 wt% to 0.8 wt%, 0.2 wt% to 1 wt%, 0.3 wt% to 0.8 wt%, etc., and ionic strength ranges, e.g., 0.01 M to 0.15 M, 0.01 M to 0.05 M, 0.02 M to 0.1 M, etc., can be combined together in any combination to provide a monovalent salt concentration profile that is desired for an ink composition to enhance color saturation or optical density. Again, when designing such an ink, the ionic strength of the monovalent salt may also be less than the crash point of the specific pigment/monovalent salt selected for use in the ink composition, e.g., from 30% to 95%, 50% to 90%, 60% to 85%, etc., of the ionic strength of the pigment crash point. Furthermore, pigment concentration ranges, e.g., 2 wt% to 7 wt%, 2 wt% to 6 wt%, 3 wt% to 5 wt%, etc., and/or pigment to monovalent salt ratio, e.g., 3:1 to 35:1, 4:1 to 20:1, 6:1 to 10:1, etc., can also be combined together with any of the monovalent salt weight percentage ranges and/or the ionic strength ranges (in any combination) to provide an ink profile that improves color saturation or optical density.

Turning now to the aqueous liquid vehicle, solvent of the liquid vehicle can be any solvent or combination of solvents that is compatible with the components of the self-dispersed pigment. As the liquid vehicle is aqueous, water is one of the major solvents (present at more than 10 wt%, and often more than 30 wt% or even more than 50 wt%), and usually, there is one or more organic co-solvent. In some examples, water may be present in an amount representing from about 20 wt% to about 90 wt%, or may be present in an amount representing from about 30 wt% to about 80 wt% of the total ink composition. If an organic co-solvent is added to prepare the self-dispersed pigment dispersion, that co-solvent can be considered when formulating the subsequent ink composition. Examples of suitable classes of co-solvents include polar solvents, such as alcohols, amides, esters, ketones, lactones, and ethers. In additional detail, solvents that can be used can include aliphatic alcohols, aromatic alcohols, diols, glycol ethers, polyglycol ethers, caprolactams, formamides, acetamides, and long chain alcohols. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs (C₆-C₁₂) of polyethylene glycol alkyl ethers, N-alkyl caprolactams, unsubstituted caprolactams, both substituted and unsubstituted formamides, both substituted and unsubstituted acetamides, and the like. More specific examples of organic solvents can include 2-pyrrolidone, 2-ethyl-2-(hydroxymethyl)-1, 3-propane diol (EPHD), glycerol, N- methylpyrrolidone (NMP), dimethyl sulfoxide, sulfolane, glycol ethers, alkyldiols such as 1,2-hexanediol,and/or ethoxylated glycerols such as LEG-1, etc. The co-solvent can be present in the ink composition from 5 wt% to about 75 wt% of the total ink composition. In one example, the solvent can be present in the ink composition at about 10 wt% to about 50 wt%, or from about 15 wt% to 35 wt%.

The liquid vehicle can also include surfactants. In general the surfactant can be water soluble and may include alkyl polyethylene oxides, alkyl phenyl polyethylene oxides, polyethylene oxide (PEO) block copolymers, acetylenic PEO, PEO esters, PEO amines, PEO amides, dimethicone copolyols, ethoxylated surfactants, alcohol ethoxylated surfactants, fluorosurfactants, and mixtures thereof. In some examples, fluorosurfactants and alcohol ethoxylated surfactants can be used as surfactants. In one example, the surfactant can be Tergitol™ TMN-6, which is available from Dow Chemical Corporation. The surfactant or combinations of surfactants, if present, can be included in the ink composition at from about 0.001 wt% to about 10 wt% and, in some examples, can be present at from about 0.001 wt% to about 5 wt% of the ink compositions. In other examples the surfactant or combinations of surfactants can be present at from about 0.01 wt% to about 3 wt% of the ink compositions.

Consistent with the formulations of this disclosure, various other additives may be employed to provide desired properties of the ink composition for specific applications. Examples of these additives are those added to inhibit the growth of harmful microorganisms. These additives may be biocides, fungicides, and other microbial agents, which are routinely used in ink formulations. Examples of suitable microbial agents include, but are not limited to, Acticide® (Thor Specialties Inc.), Nuosept™ (Nudex, Inc.), Ucarcide™ (Union carbide Corp.), Vancide® (R.T. Vanderbilt Co.), Proxel™ (ICI America), and combinations thereof. Sequestering agents such as EDTA (ethylene diamine tetra acetic acid) may be included to eliminate the deleterious effects of heavy metal impurities, and buffer solutions may be used to control the pH of the ink. Viscosity modifiers and buffers may also be present, as well as other additives known to those skilled in the art to modify properties of the ink as desired.

The ink compositions described above are particularly suited to provide good color saturation on non-specialized print media (even uncoated paper) but can be suitable for use on any type of substrate of print media. The reason these inks are particularly useful with plain paper is that color saturation is diminished fairly significantly as colorant and liquid vehicle is soaked into the media substrate. This problem is enhanced when the charge stabilization of the self-dispersed pigment is too high. Pigment formulators tend to stabilize inks with high charges, but as discussed herein, such high charge stabilization may not be the best choice for plain paper when trying to enhance saturation (or optical density). Adding the right, relatively low, concentration of a monovalent salt as described herein can provide higher saturation as the self-dispersed pigment crashes on the paper when liquid vehicle becomes absorbed into the paper fibers.

Suitable examples of media substrates that can be used include, but are not limited to include, cellulose based paper, fiber based paper, inkjet paper, nonporous media, standard office paper, swellable media, microporous media, photobase media, offset media, coated media, uncoated media, plastics, vinyl, fabrics, and woven substrate. That being described, notably, these inks work surprisingly well on plain paper substrates as described herein.

It is noted that, as used in this specification and the appended claims, the singular forms "a," "an," and "the" include plural referents unless the content clearly dictates otherwise.

As used herein "aqueous liquid vehicle" or "liquid vehicle" refers to a water-containing liquid medium in which the self-dispersed pigment, and monovalent salt are admixed in to form an ink composition. In addition to water, the aqueous liquid vehicle can include several components including but not limited to organic co-solvents, surfactants, biocides, U/V filters, preservatives, and other additives.

The term "self-dispersed pigment" includes pigments that have a small molecule, oligomer, or polymer covalently attached to the surface thereof, and does not include pigments with polymer associated therewith, e.g., adsorbed, attracted, etc.

Color "saturation" refers to the intensity of color, expressed by the degree from which it differs from white. It can be expressed as C/L*. Notably, saturation relates to color. However, in accordance with examples of the present disclosure, when a black self-dispersed pigment is used, optical density (OD) rather than color saturation can be used to describe the increased intensity. Thus, examples and discussion herein related to color saturation may also be relevant to optical density with respect to black self-dispersed pigment. Thus, any disclosure related to color saturation should be read to include black optical density (for black inks), whether explicitly stated so in a specific context or not.

Converting molar concentration to weight percent includes taking into account the molecular weight of the monovalent salt and the density of the liquid ink. Typically, the density of the ink can be from about 1.04 g/cm³ to about 1.12 g/cm³, or from about 1.06 g/cm³ to about 1.1 g/cm³, or so, depending on the ink formulation.

Notably, there may be some added ingredients that may include some incidental concentrations of monovalent salt that are inherently in the formulation of the additive. This monovalent salt is not calculated when determining the molar concentration of the added monovalent salt unless the salt that is already present in an additive is identical to the salt being added to increase the ionic strength.

As used herein, the term "about" is used to provide flexibility to a numerical range endpoint by providing that a given value may be "a little above" or "a little below" the endpoint. The degree of flexibility of this term can be dictated by the particular variable and would be within the knowledge of those skilled in the art to determine based on experience and the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, dimensions, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a weight ratio range of about 1 wt% to about 20 wt% should be interpreted to include not only the explicitly recited limits of about 1 wt% and about 20 wt%, but also to include individual weights such as 2 wt%, 11 wt%, 14 wt%, and sub-ranges such as 10 wt% to 20 wt%, 5 wt% to 15 wt%, etc.

When referring to an increase or improvement in performance, the increase or improvement is based on printing using Staples Office Copy Paper as the print medium, which was available at the time of filing of the disclosure in the United States Patent and Trademark Office.

### EXAMPLES

The following examples illustrate the technology of the present disclosure. However, it is to be understood that the following is only exemplary or illustrative of the application of the principles of the presented formulations and methods. Numerous modifications and alternative methods may be devised by those skilled in the art without departing from the spirit and scope of the present disclosure. The appended claims are intended to cover such modifications and arrangements. Thus, while the technology has been described above with particularity, the following provide further detail in connection with what are presently deemed to be certain acceptable examples.

### Example 1 - Preparation of Ink Compositions with Self-dispersed Pigments and KCI Salt

Three self-dispersed pigments were formulated into ink compositions using Cyan (Cabo-O-Jet® 450C from Cabot Corp.), Magenta (Cabo-O-Jet® 465M from Cabot Corp.), and Yellow Cab-O-Jet® 470Y from Cabot Corp.). Multiple samples of this inkjet ink compositions were further modified with the addition of incrementally increasing concentrations of potassium chloride, ranging from ionic strengths just above 0 to 0.3 M. Additionally, one sample for each color remained as formulated without the addition monovalent salt. Thus, the multiple ink samples were prepared from three colors, each at multiple salt concentrations ranging from 0 wt% to about 2 wt% (from 0 to 0.3 M). With the varying concentrations of potassium chloride, the self-dispersed pigment and solvent concentrations were held constant. The formulation used to prepare these inks is as follows:

**Table 1 - Ink Compositions with Incrementally Increased KCL Concentration**

| **Ingredient** | **Class** | **Weight %** |
|---|---|---|
| 2-hyroxylmethyl-2-pyrrolidinone | Solvent | 6 |
| Sulfolane | Solvent | 6 |
| Sorbitol | Solvent | 20 |
| Potassium Chloride | Salt | 0-2 |
| Self-dispersed Pigment | Colorant | 3 or 3.5 |
| Water | | Balance |

Note that the Cyan self-dispersed pigment was at 3 wt%, the Magenta self-dispersed pigment was at 3 wt%, and the Yellow self-dispersed pigment was at 3.5 wt.

### Example 2 - Preparation of Ink Compositions with Self-dispersed Pigments and NaNO₃ Salt

Three self-dispersed pigments were formulated into ink compositions with Cyan (Cabo-O-Jet® 450C from Cabot Corp.), Magenta (Cabo-O-Jet® 465M from Cabot Corp.), and Yellow (Cab-O-Jet® 470Y from Cabot Corp.). These inkjet ink compositions were further modified with the addition of different concentrations of monovalent salt, namely sodium nitrate (NaNO₃) salt. Specifically, each ink color was prepared at 0 wt% salt, 0.375 wt% (about 0.05 M) salt, and 0.75 wt% (about 0.1 M) salt. Thus, nine (9) ink samples were prepared from three colors and three salt concentrations. With the varying concentrations of sodium nitrate, the self-dispersed pigment and solvent concentrations were held constant. The formulation for each of the inks is shown below in Table 2, as follows:

**Table 2 - Ink Compositions with Incrementally Increased NaNO₃ Salt Concentration**

| **Ingredient** | **Class** | **Weight %** |
|---|---|---|
| 2-hyroxylmethyl-2-pyrrolidinone | Solvent | 6 |
| Sulfolane | Solvent | 6 |
| Sorbitol | Solvent | 20 |
| Sodium Nitrate | Salt | 0, 0.375, or 0.75 |
| Self-dispersed Pigment | Colorant | 3 or 3.5 |
| Water | | Balance |

Note that the Cyan self-dispersed pigment was at 3.0 wt%, the Magenta self-dispersed pigment was at 3.5 wt%, and the Yellow self-dispersed pigment was at 3.5 wt.

### Example 3 - Colloidal Vibrational Current

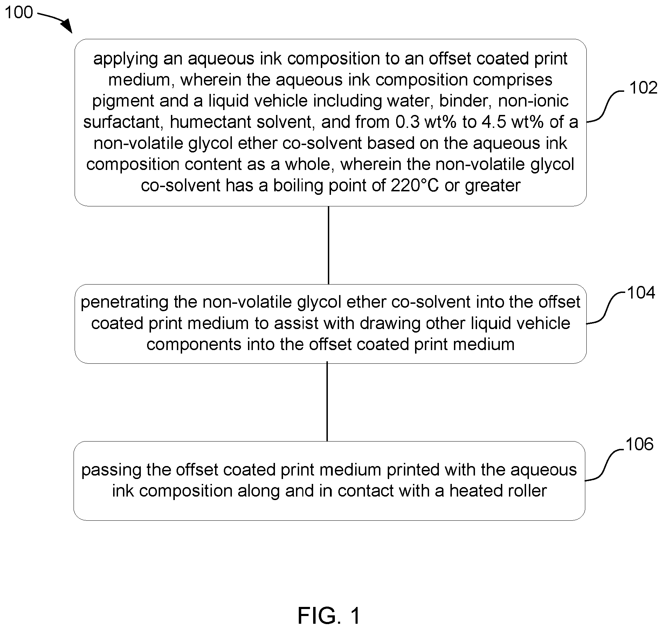

Each of the inks prepared in accordance with Example 1 was evaluated for pigment colloidal vibrational current (CVI) using a model DT-100 acoustic spectrometer from Dispersions Technology Inc. For each potassium chloride concentration, the CVI phase measurement was averaged over several acquisitions. The results are shown in FIG. 1. As can be seen, crash points were identified based on the location on the chart where the CVI phase (theta, θ) dropped significantly from at least above about 350 for each of the colors tested. The ionic strength where that occurred was different for each color, e.g. about 0.02 for magenta (cpM), about 0.03 for yellow (cpY), and about 0.05 for cyan (cpC). Notably, at monovalent salt concentrations above about 0.5 wt% in this example (at an ionic strength from about 0.08 M) the pigments had generally crashed. Other pigments and/or monovalent salt concentrations may, however, provide crash points closer to 0.1 wt% or 1 wt% as described herein.

### Example 4 - Saturation

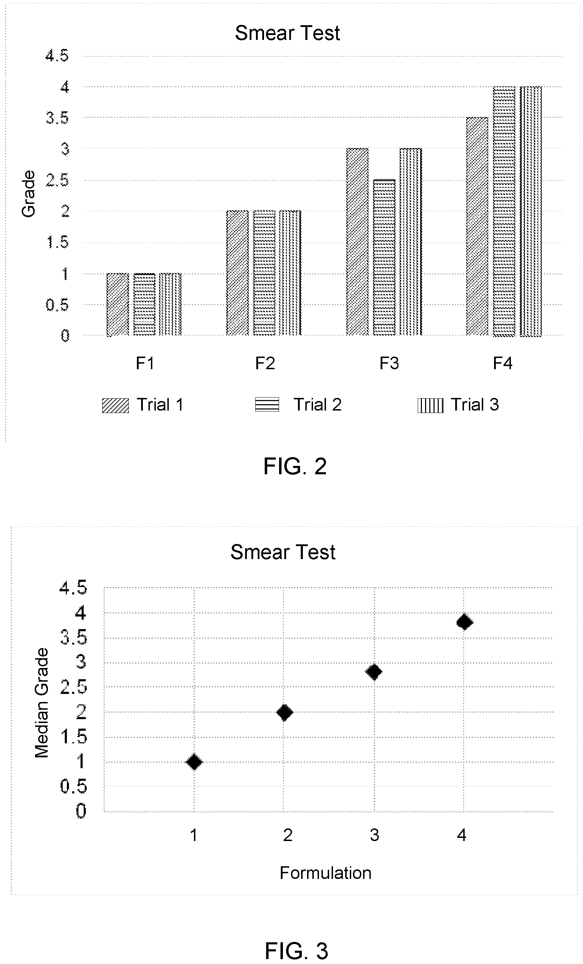

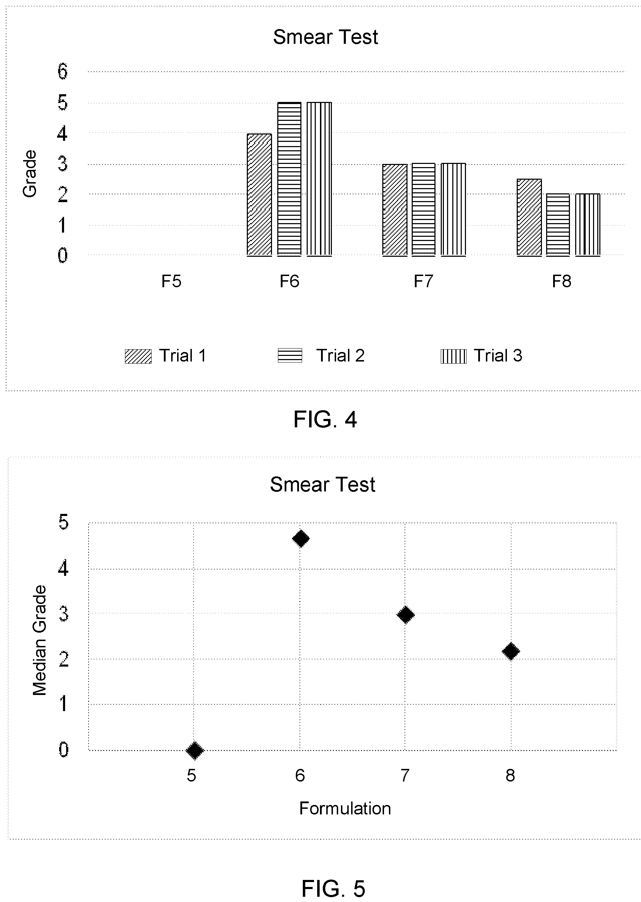

Each of the nine (9) inks prepared in accordance with Example 2 was printed as a primary color (CMY) on plain paper at 600 ng/300th, and then measured for color saturation. These three primary inks were also printed as two (2) ink mixtures to generate secondary colors, namely Red (R), Green (G), and Blue (B). Generally, it was found that as the sodium nitrate concentration was increased within a relatively low concentration range from 0 w% to 0.375 wt% (about 0.05 M) and then to 0.75 wt% (about 0.1 M), the saturation (C/L*) generally increased. In other words, this data demonstrates how salt addition in relatively small concentrations can improve color saturation. The data is provided numerically in Table 3, as well as graphically in FIGS. 2 and 3.

**Table 3 - Color Saturation on Staples Office Copy Paper**

| | **Saturation at 60ng/300th** | | | | | |
|---|---|---|---|---|---|---|
| **Wt% Salt** | **Cyan** | **Magenta** | **Yellow** | **Red** | **Green** | **Blue** |
| 0 | 0.76 | 0.85 | 0.901 | 0.727 | 0926 | 0.713 |
| 0.375 | 0.877 | 1.091 | 1.01 | 0.907 | 1.093 | 0.880 |
| 0.75 | - | 1.128 | 0.966 | 0.908 | - | - |

Note - There is no data for Cyan, Green, or Blue because the Cyan is believed to have begun to crash at this concentration of salt (as evidenced by nozzle health compromise).

As can be seen, the trend of saturation increases as the salt concentration increases. At some concentration of salt, e.g., above 0.75 wt% in the case of the magenta and yellow examples, but may be up to about 1 wt%, the crash point may be reached and the self-dispersed pigment may not remain stable in the ink, which can cause nozzle clogging and other printing issues.

## Claims

1. An ink composition, comprising:
an aqueous liquid vehicle;
from 2 wt% to 7 wt% self-dispersed pigment dispersed in the aqueous liquid vehicle; and
from 0.1 wt% to 1 wt% monovalent salt,
wherein the self-dispersed pigment to monovalent salt weight ratio in the ink composition is from 3:1 to 35:1,
wherein the self-dispersed pigment has a crash point at a molar concentration of the monovalent salt in the ink composition, and wherein the monovalent salt is present at from 30% to 95% of the molar concentration of the crash point and wherein the self-dispersed pigment is yellow or magenta, and the crash point is from 0.01 M to 0.05 M; or the self-dispersed pigment is cyan, and the crash point is from 0.03 M to 0.1 M.

2. The ink composition of claim 1, wherein the monovalent salt is present in the ink composition at from 0.3 wt% to 0.8 wt%, and the weight ratio is from 4:1 to 20:1.

3. The ink composition of claim 1, wherein the monovalent salt includes an alkali metal salt.

4. The ink composition of claim 1, wherein the monovalent salt includes a monovalent non-metallic salt.

5. The ink composition of claim 1, wherein the monovalent salt is present at a molar concentration from 50% to 90% of the crash point.

6. The ink composition of claim 1, wherein the self-dispersed pigment remains stable while in an inkjet fluid container, and wherein when the ink composition is printed on plain paper, aqueous liquid vehicle is absorbed into the paper thus increasing the concentration of the monovalent salt at a surface of the paper causing the self-dispersed pigment to crash at the surface of the paper.

7. A method of formulating an ink composition, comprising:
dispersing from 2 wt% to 7 wt% self-dispersed pigment in an aqueous liquid vehicle; and
adding from 0.1 wt% to 1 wt% monovalent salt to the aqueous liquid vehicle, wherein the self-dispersed pigment to monovalent salt weight ratio in the ink composition is from 3:1 to 35:1, and wherein the monovalent salt brings the ink to from 30% to 95% of a molar concentration of a crash point of the self-dispersed pigment, and wherein the self-dispersed pigment is yellow or magenta, and the crash point is from 0.01 M to 0.05 M; or the self-dispersed pigment is cyan, and the crash point is from 0.03 M to 0.1 M.

8. The method of claim 7, wherein the monovalent salt brings the ink to from 50% to 90% of the molar concentration of the crash point of the self-dispersed pigment.

9. A method of determining a crash point of a self-dispersed pigment, comprising:
formulating an ink composition which includes a self-dispersed pigment;
adding known concentrations of a monovalent salt to the ink composition to formulate multiple test samples, the multiple test samples provided by i) incrementally adding known concentrations to the ink composition or ii) adding different known concentrations to multiple portions of the ink composition;
measuring colloidal vibrational current of the multiple test samples containing the various known concentrations of the monovalent salt; and
determining a peak or near peak colloidal vibrational current which is just prior to a drop in the colloidal vibrational current, wherein the crash point is between the peak or near peak colloidal vibrational current and a drop in colloidal vibrational current.

## Patentansprüche

1. Tintenzusammensetzung, die Folgendes umfasst:
eine wässrige flüssige Trägersubstanz;
von 2 Gew.-% bis 7 Gew.-% selbstdispergiertes Pigment, das in der wässrigen flüssigen Trägersubstanz dispergiert ist; und
von 0,1 Gew.-% bis 1 Gew.-% einwertiges Salz,
wobei das Gewichtsverhältnis von selbstdispergiertem Pigment zu einwertigem Salz in der Tintenzusammensetzung von 3 : 1 bis 35 : 1 beträgt,
wobei das selbstdispergierte Pigment einen Zerfallpunkt bei einer molaren Konzentration des einwertigen Salzes in der Tintenzusammensetzung aufweist und wobei das einwertige Salz bei von 30 % bis 95 % der molaren Konzentration des Zerfallpunkts vorhanden ist, und
wobei das selbstdispergierte Pigment Gelb oder Magenta ist und der Zerfallpunkt von 0,01 M bis 0,05 M beträgt; oder das selbstdispergierte Pigment Cyan ist und der Zerfallpunkt von 0,03 M bis 0,1 M beträgt.

2. Tintenzusammensetzung nach Anspruch 1, wobei das einwertige Salz in der Tintenzusammensetzung bei von 0,3 Gew.-% bis 0,8 Gew.-% vorhanden ist und das Gewichtsverhältnis von 4 : 1 bis 20 : 1 beträgt.

3. Tintenzusammensetzung nach Anspruch 1, wobei das einwertige Salz ein Alkalimetallsalz einschließt.

4. Tintenzusammensetzung nach Anspruch 1, wobei das einwertige Salz ein einwertiges nichtmetallisches Salz einschließt.

5. Tintenzusammensetzung nach Anspruch 1, wobei das einwertige Salz in einer molaren Konzentration von 50 % bis 90 % des Zerfallpunkts vorhanden ist.

6. Tintenzusammensetzung nach Anspruch 1, wobei das selbstdispergierte Pigment in einem Tintenstrahlfluidbehälter stabil bleibt und wobei, wenn die Tintenzusammensetzung auf Normalpapier gedruckt wird, die wässrige flüssige Trägersubstanz in das Papier absorbiert wird, wodurch die Konzentration des einwertigen Salzes an einer Oberfläche des Papiers erhöht wird, was das selbstdispergierte Pigment dazu veranlasst, an der Oberfläche des Papiers zu zerfallen.

7. Verfahren zum Formulieren einer Tintenzusammensetzung, das Folgendes umfasst:
Dispergieren von 2 Gew.-% bis 7 Gew.-% selbstdispergiertem Pigment in einer wässrigen flüssigen Trägersubstanz; und
Zugeben von 0,1 Gew.-% bis 1 Gew.-% einwertigem Salz zu der wässrigen flüssigen Trägersubstanz, wobei das Gewichtsverhältnis von selbstdispergiertem Pigment zu einwertigem Salz in der Tintenzusammensetzung von 3 : 1 bis 35 : 1 beträgt, und wobei das einwertige Salz die Tinte auf von 30 % bis 95 % einer molaren Konzentration eines Zerfallpunkts des selbstdispergierten Pigments bringt, und wobei das selbstdispergierte Pigment Gelb oder Magenta ist und der Zerfallpunkt von 0,01 M bis 0,05 M beträgt; oder das selbstdispergierte Pigment Cyan ist und der Zerfallpunkt von 0,03 M bis 0,1 M beträgt.

8. Verfahren nach Anspruch 7, wobei das einwertige Salz die Tinte auf von 50 % bis 90 % der molaren Konzentration des Zerfallpunkts des selbstdispergierten Pigments bringt.

9. Verfahren zum Bestimmen eines Zerfallpunkts eines selbstdispergierten Pigments, das Folgendes umfasst:
Formulieren einer Tintenzusammensetzung, die ein selbstdispergiertes Pigment einschließt;
Zugeben bekannter Konzentrationen eines einwertigen Salzes zu der Tintenzusammensetzung, um mehrere Testproben zu formulieren, wobei die mehreren Testproben durch Folgendes bereitgestellt werden: i) schrittweises Zugeben bekannter Konzentrationen zu der Tintenzusammensetzung oder ii) Zugeben verschiedener bekannter Konzentrationen zu mehreren Anteilen der Tintenzusammensetzung;
Messen eines kolloidalen Schwingungsstroms der mehreren Testproben, die die verschiedenen bekannten Konzentrationen des einwertigen Salzes enthalten; und
Bestimmen eines kolloidalen Spitzen- oder Nahspitzenschwingungsstroms, der unmittelbar vor einem Abfall des kolloidalen Schwingungsstroms liegt, wobei der Zerfallpunkt zwischen dem kolloidalen Spitzen- oder Nahspitzenschwingungsstrom und einem Abfall des kolloidalen Schwingungsstroms liegt.

## Revendications

1. Composition d'encre comprenant :
un véhicule liquide aqueux ;
de 2 % en poids à 7 % en poids de pigment auto-dispersé dispersé dans le véhicule liquide aqueux ; et
de 0,1 % en poids à 1 % en poids de sel monovalent,
dans laquelle le rapport en poids entre le pigment auto-dispersé et le sel monovalent dans la composition d'encre est compris entre 3:1 et 35:1,
dans laquelle le pigment auto-dispersé présente un point d'écrasement à une concentration molaire du sel monovalent dans la composition d'encre, le sel monovalent étant présent en une concentration molaire de 30 % à 95 % du point d'écrasement et
dans laquelle le pigment auto-dispersé est jaune ou magenta, et le point d'écrasement est de 0,01 M à 0,05 M ; ou le pigment auto-dispersé est cyan, et le point d'écrasement est de 0,03 M à 0,1 M.

2. Composition d'encre selon la revendication 1, dans laquelle le sel monovalent est présent dans la composition d'encre à raison de 0,3 % en poids à 0,8 % en poids, et le rapport en poids est compris entre 4:1 et 20:1.

3. Composition d'encre selon la revendication 1, dans laquelle le sel monovalent comporte un sel de métal alcalin.

4. Composition d'encre selon la revendication 1, dans laquelle le sel monovalent comporte un sel monovalent non métallique.

5. Composition d'encre selon la revendication 1, dans laquelle le sel monovalent est présent en une concentration molaire de 50 % à 90 % du point d'écrasement.

6. Composition d'encre selon la revendication 1, dans laquelle le pigment auto-dispersé reste stable lorsqu'il est dans un récipient de fluide à jet d'encre, et dans laquelle lorsque la composition d'encre est imprimée sur du papier ordinaire, un véhicule liquide aqueux est absorbé dans le papier, augmentant ainsi la concentration du sel monovalent à une surface du papier provoquant l'écrasement du pigment auto-dispersé à la surface du papier.

7. Procédé de formulation d'une composition d'encre, comprenant :
la dispersion de 2 % en poids à 7 % en poids de pigment auto-dispersé dans un véhicule liquide aqueux ; et
l'ajout de 0,1 % en poids à 1 % en poids de sel monovalent au véhicule liquide aqueux, le rapport en poids du pigment auto-dispersé au sel monovalent dans la composition d'encre étant de 3:1 à 35:1, et le sel monovalent amenant l'encre à 30 % à 95 % d'une concentration molaire d'un point d'écrasement du pigment auto-dispersé, et dans laquelle le pigment auto-dispersé est jaune ou magenta, et le point d'écrasement est de 0,01 M à 0,05 M ; ou le pigment auto-dispersé est cyan, et le point d'écrasement est de 0,03 M à 0,1 M.

8. Procédé selon la revendication 7, dans lequel le sel monovalent amène l'encre à 50 % à 90 % de la concentration molaire du point d'écrasement du pigment auto-dispersé.

9. Procédé de détermination d'un point d'écrasement d'un pigment auto-dispersé, comprenant :
la formulation d'une composition d'encre qui comporte un pigment auto-dispersé ;
l'ajout de concentrations connues d'un sel monovalent à la composition d'encre pour formuler de multiples échantillons pour essai, les multiples échantillons pour essai étant fournis en i) ajoutant progressivement des concentrations connues à la composition d'encre ou ii) en ajoutant différentes concentrations connues à des parties multiples de la composition d'encre ;
la mesure du courant vibratoire colloïdal des multiples échantillons pour essai contenant les diverses concentrations connues du sel monovalent ; et
la détermination d'un courant vibratoire colloïdal de crête ou proche de la crête qui est juste avant une chute du courant vibrationnel colloïdal, le point d'écrasement étant entre le courant vibratoire colloïdal de crête ou proche de la crête et une chute du courant vibratoire colloïdal.
